# EUROPEAN PATENT APPLICATION

(11) **EP 2 639 686 A2**
(43) Date of publication of application: **18.09.2013**
(21) Application number: 12197752.4
(22) Date of filing: 18.12.2012
(51) Int. Cl.: G06F 3/0488

(54) **Input control device, input control program, and input control method**

(30) Priority: 16.03.2012 JP 2012061189
(71) Applicant: FUJITSU LIMITED, Kawasaki-shi, Kanagawa 211-8588 (JP)
(72) Inventor: Takahashi Hideki, Kawasaki-shi, Kanagawa 211-8588 (JP)
(74) Representative: Ward, James Norman

(57) **Abstract**

Improvement in operability and simplification of a configuration are realized. In an input control device (10), a detection unit (12) detects a detection target. This detection is carried out based on the sensing value acquired by the acquisition unit (11), and the threshold set by selecting either the first threshold corresponding to the first sensing area and the second threshold corresponding to the second sensing area having a shorter distance from the input unit than the first sensing area. When the first threshold is set and the detection target is detected, a display control unit (14) enlarges an image displayed on the display unit and a setting unit (13) sets the second threshold instead of the first threshold.

## Description

### FIELD

The embodiments discussed herein are related to an input control device, an input control program, and an input control method.

### BACKGROUND

In recent years, electronic equipment with a touch panel, such as a mobile terminal, has widely spread. The touch panel has both an input function and a display function. The user causes the electronic equipment to execute a process corresponding to a selection object by touching the "selection object", such as a button displayed on the touch panel.

The electronic equipment, such as mobile terminals, has been miniaturized. Therefore, in a case where many items of information are displayed on the touch panel of the miniaturized electronic equipment, the size of the displayed selection objects is reduced. This induces the user to make an erroneous input. In order to avoid this and improve the operability, conventionally electronic equipment with two different sensors has been proposed which detects a contact-predetermined position with a first sensor before a detection target such as user's finger comes into touch with the touch panel, and displays an image around the contact-predetermined position in an enlarged manner. In such electronic equipment, detection of a position in the touch panel with which the detection target comes into touch is carried out with a second sensor.

Moreover, electronic equipment of another type also has been proposed. This electronic equipment includes an input control device enabling two kinds of operations, that is, a touch operation in which a finger or the like comes in direct touch with the touch panel and a spatial operation which does not require direct touch with the touch panel by being provided with two sensors different in sensitivity.
Patent Document 1: Japanese Laid-open Patent Publication No. 2009-3867
Patent Document 2: Japanese Laid-open Patent Publication No. 2011-22961

However, the configuration of the conventional electronic equipment is complicated because it is equipped with two sensors.

Accordingly, it is an object in one aspect of an embodiment of the invention to provide an input control device, an input control program, and an input control method that are capable of simplifying the configuration of equipment and improve the operability of the equipment.

### SUMMARY

According to an aspect of an embodiment, an input control device includes an acquisition unit that acquires a sensing value that varies depending on a distance between a detection target and an input unit and sensed by a sensing device included in the input unit; a detection unit that detects the detection target based on the acquired sensing value and a threshold selected from among a first threshold corresponding to a first sensing area and a second threshold corresponding to a second sensing area having a shorter distance from the input unit than the first area; a display control unit that enlarges an image displayed on a display unit when the first threshold is set and the detection target is detected; and a setting unit that sets the second threshold instead of the first threshold when the first threshold is set and the detection target is detected.

### BRIEF DESCRIPTION OF DRAWINGS

FIG. 1 is a block diagram illustrating an example of an input control device of a first embodiment;
FIG. 2 is a diagram illustrating a threshold table of the first embodiment;
FIG. 3 is a flowchart illustrating an example of a processing operation of the input control device of the first embodiment;
FIG. 4 is a block diagram illustrating an example of an input control device of a second embodiment;
FIG. 5 is a flowchart illustrating an example of a processing operation of the input control device of the second embodiment;
FIG. 6 is a diagram to describe the processing operation of the input control device of the second embodiment;
FIG. 7 is an explanatory diagram illustrating a computer which executes an input control program; and
FIG. 8 is a diagram illustrating an example of a software configuration.

### DESCRIPTION OF EMBODIMENTS

Preferred embodiments of the present invention will be explained with reference to accompanying drawings.

The input control device, the input control program, and the input control method disclosed by the present application are not limited by the embodiments. In the embodiments, configurations having the same function are denoted like reference signs and description thereof is not repeated.

### [a] First Embodiment

### Configuration of Input Control Device 10

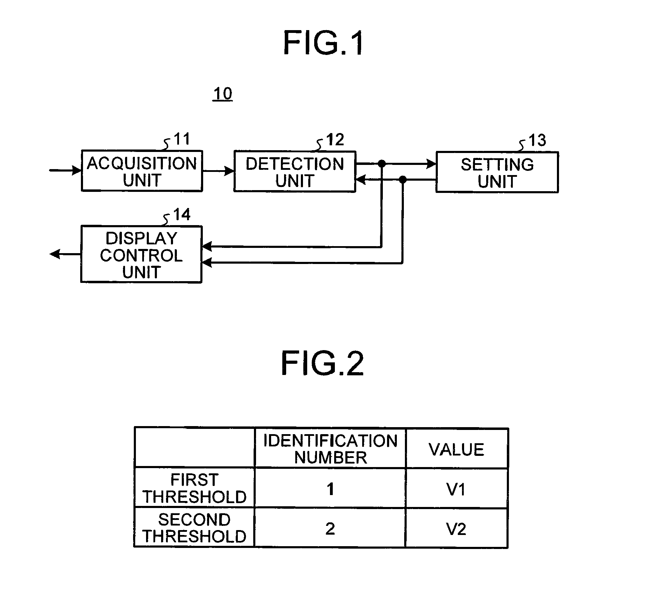

FIG. 1 is a block diagram illustrating an example of an input control device of a first embodiment. Referring to FIG. 1, an input control device 10 includes an acquisition unit 11, a detection unit 12, a setting unit 13, and a display control unit 14.

The acquisition unit 11 acquires a sensing value sensed by a sensing device included in an input unit (not illustrated) with a predetermined period. The sensing value is a value that varies depending on the distance between a detection target and the input unit. The acquired sensing value is output to the detection unit 12. Here, the input unit and the display unit described below are one touch panel, for example. The sensing device includes an insulating film, an electrode layer underlying the insulating film, and a substrate layer to mount a control IC thereon when the touch panel has an electrostatic system.

The detection unit 12 detects the detection target, based on the sensing value received from the acquisition unit 11 and a threshold set by the setting unit 13. The detection target is usually user's finger or a pointing device used for an input operation.

Specifically, the threshold which is preset is one of a first threshold corresponding to a first sensing area, and a second threshold corresponding to a second sensing area. The distance from the input unit to the first sensing area is longer than the distance from the input unit to the second sensing area. That is, the detection unit 12 can sense that the detection target is present within a range of a distance D1 from the input unit when the first threshold is set, and can sense that the detection unit is present in a range of a distance D2 (D2 < D1) from the input unit when the second threshold is set. That is, the state in which the first threshold is set is referred to as a "high sensitivity state", and the state in which the second threshold is set is referred to as a "low sensitivity state."

The result of the detection by the detection unit 12 is output to the setting unit 13 and the display control unit 14.

The setting unit 13 sets the threshold to be used by the detection unit 12.

Specifically, the setting unit 13 selects the first threshold as an initial value. When the first threshold is set to be used by the detection unit 12 and the detection target is detected, the setting unit 13 selects the second threshold. After the second threshold is set and the detection target is detected, the setting unit 13 selects the first threshold.

The setting unit 13 stores a threshold table in which identification numbers of the first threshold and the second threshold and the values of the thresholds according to each identification number are associated. The setting unit 13 outputs the identification number and the value of the selected threshold to the detection unit 12 and the display control unit 14. FIG. 2 is a diagram illustrating the threshold table of the first embodiment. When the input unit is an electrostatic-type touch panel and the sensing value is capacitance between electrodes, the relation "V1 < V2" is established in FIG. 2.

The display control unit 14 outputs, to the display unit, a control signal for enlarging an image displayed on the display unit when the first threshold is set and the detection target is detected. The display control unit 14 outputs, to the display unit, a control signal for canceling the enlarged state of the image displayed on the display unit when the second threshold is set and the detection target is detected. The display control unit 14 may output, to the display unit, the control signal for canceling the enlarged state of the image displayed on the display unit when the detection target is not detected even though predetermined time passes after the image is displayed in an enlarged manner as well as when the second threshold is set and the detection target is detected.

### Operation of Input Control Device 10

Operation of the input control device 10 having the above-described configuration will be described.

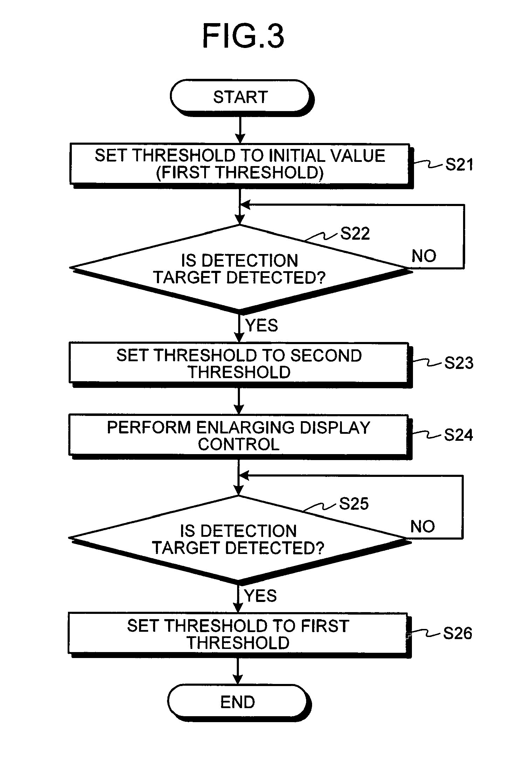

FIG. 3 is a flowchart illustrating an example of a processing operation of the input control device 10 of the first embodiment.

The setting unit 13 sets the first threshold as an initial value (Step S21).

The setting unit 13 determines whether the detection target is detected, based on the detection result, which is based on the latest sensing value detected by the detection unit 12, and the first threshold (Step S22). This determination is repeated until the detection target is detected (No in Step S22).

When it is determined that the detection target is detected (Yes in Step S22), the setting unit 13 sets the second threshold instead of the first threshold (Step S23). As a result, the high sensitivity state is switched to the low sensitivity state.

When it is determined that the detection target is detected (Yes in Step S22), the display control unit 14 performs display enlarging control (Step S24). The display enlarging control is carried out by outputting, to the display unit, the control signal for expanding the image displayed on the display unit. With the display enlarging control, for example, a portion of the image displayed on the display unit is enlarged and displayed.

Subsequently, the setting unit 13 determines whether the detection target is detected, based on the detection result which is based on the latest sensing value detected by the detection unit 12 and the second threshold (Step S25). This determination is repeated until the detection target is detected (No in Step S25).

When it is determined that the detection target is detected (Yes in Step S25), the setting unit 13 sets the first threshold instead of the second threshold (Step S26). As a result, the low sensitivity state is switched to the high sensitivity state.

The determination in Step S25 may be terminated by a time-out method, that is, when predetermined time passes after the image is enlarged and displayed. That is, when the detection target is not detected in predetermined time after the second threshold is set, the setting unit 13 may output a canceling instruction of canceling the enlarged display to the display control unit 14 and may set the first threshold instead of the second threshold.

As described above, according to the embodiment, the detection unit 12 detects the detection target in the input control device 10. This detection is carried out based on the sensing value acquired by the acquisition unit 11, and the threshold set by selecting either the first threshold corresponding to the first sensing area and the second threshold corresponding to the second sensing area having a shorter distance from the input unit than the first sensing area. When the first threshold is set and the detection target is detected, the display control unit 14 enlarges the image displayed on the display unit and the setting unit 13 sets the second threshold instead of the first threshold.

With this operation, since the enlarged state can be maintained unchanged until the detection target comes further closer to the input unit, the erroneous input by the user can be prevented. As a result, the operability of the input unit may be improved. Moreover, since two kinds of detections, high sensitivity and low sensitivity detections, can be achieved with a single input unit by switching between thresholds, the configuration of equipment can be simplified.

### [b] Second Embodiment

In a second embodiment, a contact-predetermined position is calculated in a high sensitivity state, and a selection object which is present in a search range including the contact-predetermined position is enlarged and displayed.

### Configuration of Input Control Device 30

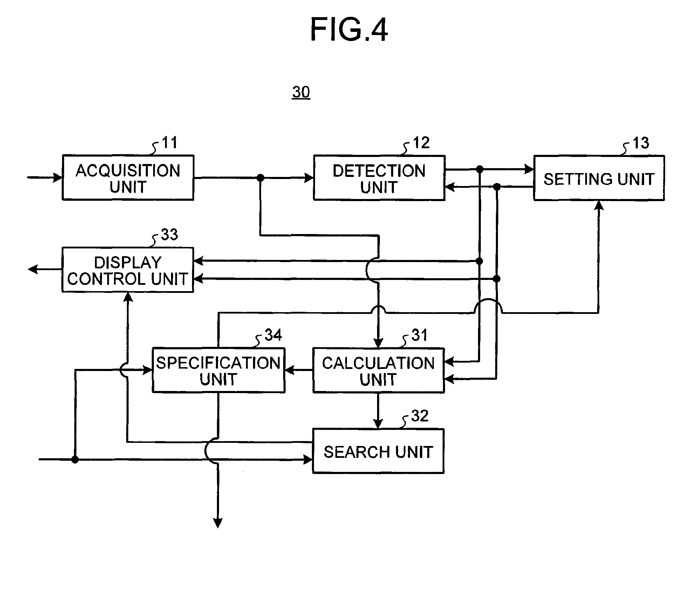

FIG. 4 is a block diagram illustrating an example of an input control device of the second embodiment. Referring to FIG. 4, an input control device 30 includes a calculation unit 31, a search unit 32, a display control unit 33, and a specification unit 34.

At detection timing determined based on a first threshold, that is, during the high sensitivity state, the calculation unit 31 calculates a contact-predetermined position of a detection target in an input unit, based on a sensing value received from the acquisition unit 11. Specifically, in the high sensitivity state, the calculation unit 31 receives a plurality of coordinates on the screen of the input unit, that is, the screen of a touch panel, and sensing values detected by a sensor which correspond to the respective coordinates, and calculates the coordinates (XMAX, YMAX) with the largest sensing value as the contact-predetermined position.

At detection timing determined based on a second threshold, that is, during a low sensitivity state, the calculation unit 31 calculates a contact position of the detection target in the input unit, based on the sensing value received from the acquisition unit 11. Specifically, in the low sensitivity state, the calculation unit 31 receives a plurality of coordinates on the screen of the input unit, that is, the screen of the touch panel, and sensing values detected by the sensor which correspond to the respective coordinates, and calculates the coordinates (X'_{MAX}, Y'_{MAX}) with the largest sensing value as the contact position.

The search unit 32 sets a "search range" including the contact-predetermined position calculated by the calculation unit 31. Specifically, the search unit 32 sets a rectangle having apexes (X_{MAX} - a, Y_{MAX} - b), (X_{MAX} + a, Y_{MAX} - b), (X_{MAX} - a, Y_{MAX} + b), and (X_{MAX} + a, Y_{MAX} + b) as the search range. The values "a" and "b" may be values equal to each other or values different from each other.

The search unit 32 searches for a selection object within the search range. This search process is performed over the entire search range. Here, the selection object is a button or a hyperlink text.

The display control unit 33 enlarges and displays the selection object searched by the search unit 32 when the first threshold is set and the detection target is detected. The selection object may be enlarged and displayed regardless of the number of searched selection objects, or the selection object may be enlarged and displayed only when there are a predetermined number of selection objects.

The specification unit 34 specifies the selection object as an execution subject when a position in the display unit corresponding to a contact position calculated by the calculation unit 31 agrees with a display position of the selection object searched by the search unit 32. The information on a specified execution target is output to a processor (not illustrated), and a process corresponding to the execution target is executed by the processor.

The specification unit 34 outputs information which signifies that the execution target has been specified, to the setting unit 13. By receiving this information, the setting unit 13 sets the first threshold instead of the second threshold.

### Operation of Input Control Device 30

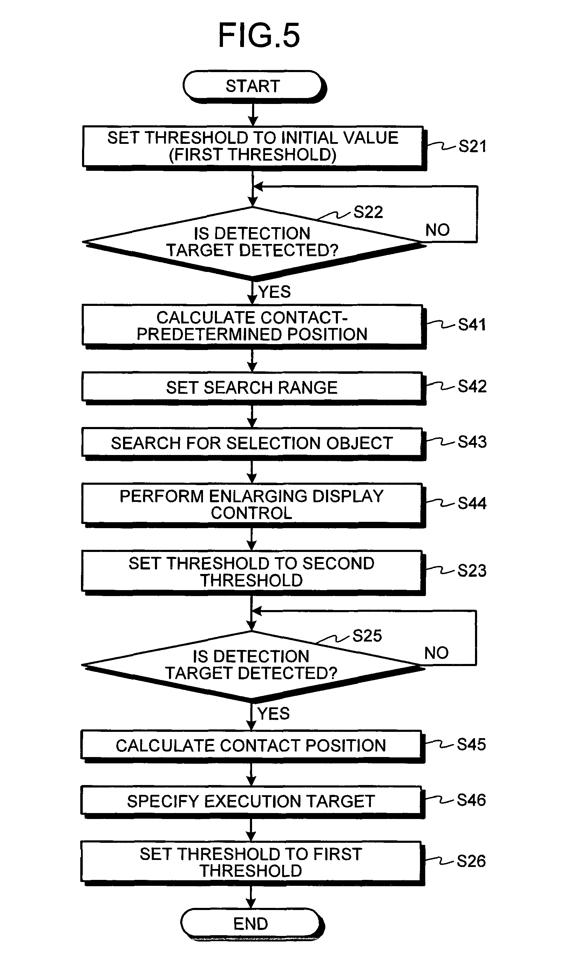

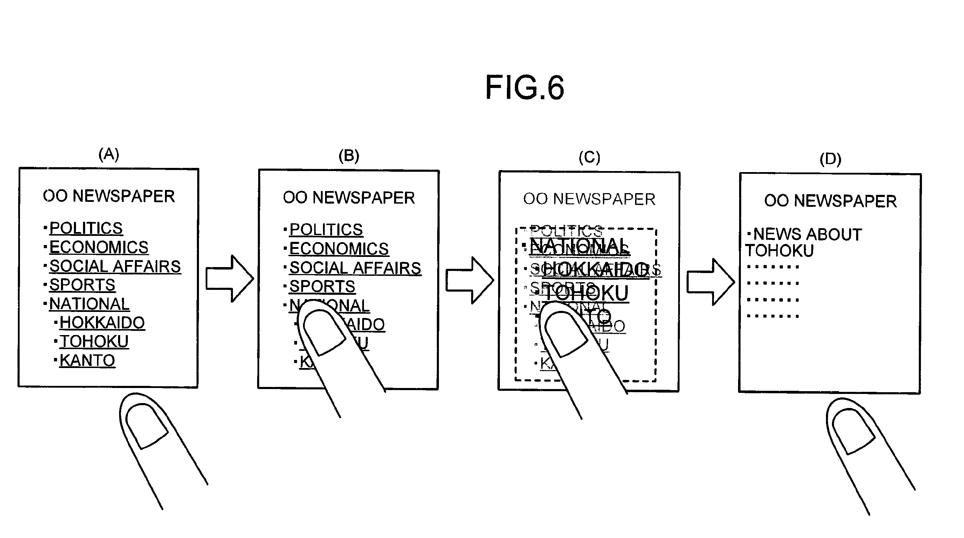

FIG. 5 is a flowchart illustrating an example of a processing operation of the input control device 30 of the second embodiment. FIG. 6 is a diagram to describe the processing operation of the input control device 30 of the second embodiment.

The setting unit 13 sets the first threshold as an initial value (Step S21) like in the flowchart of FIG. 3. Subsequently, the setting unit 13 determines whether the detection target is detected, based on the detection result which is based on the latest sensing value detected by the detection unit 12 and the first threshold (Step S22). In FIG. 6(A), since a finger which is a detection target is not yet detected, a display image is not yet expanded, either.

When it is determined that the first threshold is set and the detection target is detected (Yes in Step S22), the calculation unit 31 calculates a contact-predetermined position of the detection target in the input unit based on the sensing value received from the acquisition unit 11 in the high sensitivity state (Step S41). In FIG. 6(B), the finger which is a detection target is detected and the contact-predetermined position of the finger is calculated.

The search unit 32 sets a search range including the contact-predetermined position calculated by the calculation unit 31 (Step S42), and searches for the selection object being present in the search range (Step S43).

When the first threshold is set and the detection target is detected, the display control unit 33 enlarges and displays the selection object searched by the search unit 32 (Step S44). In FIG. 6(C), the hyperlink texts "area", "Hokkaido", "northeast", and "Kanto" which are searched within the search range are enlarged and displayed.

When it is determined that the detection target is detected in the high sensitivity state (Yes in Step S22), the setting unit 13 sets the second threshold instead of the first threshold (Step S23).

When it is determined that the second threshold is set and the detection target is detected (Yes in Step S25), the calculation unit 31 calculates a contact position of the detection target in the input unit based on the sensing value received from the acquisition unit 11 in the high sensitivity state (Step S45). In FIG. 6(C), the finger which is a detection target is detected and the contact position of the finger is calculated.

When the position in the display unit corresponding to the contact position calculated by the calculation unit 31 agrees with the display position of the selection object searched by the search unit 32, the specification unit 34 specifies the selection object as an execution target (Step S46). Since the position in the display unit corresponding to the contact position agrees with the display position of the hyperlink text "Tohoku" in FIG. 6(C), the news of the Tohoku district is displayed in FIG. 6(D).

According to the present embodiment, in the input control device 30, the calculation unit 31 calculates the contact-predetermined position of the detection target in the input unit, based on the sensing value acquired at detection timing determined based on the first threshold. Subsequently, the search unit 32 searches, for the selection object, in the search range including the position in the display unit corresponding to the contact-predetermined position. Subsequently, the display control unit 33 enlarges and displays the selection object searched by the search unit 32.

In addition, the calculation unit 31 calculates the contact position of the detection target in the input unit based on the sensing value acquired at the detection timing determined based on the second threshold. When the position in the display unit corresponding to the contact position calculated by the calculation unit 31 agrees with the display position of the selection object searched by the search unit 32, the specification unit 34 specifies the selection object as an execution target.

In this way, the user can easily perform the operation of selecting the selection object of the target.

### [c] Other Embodiments

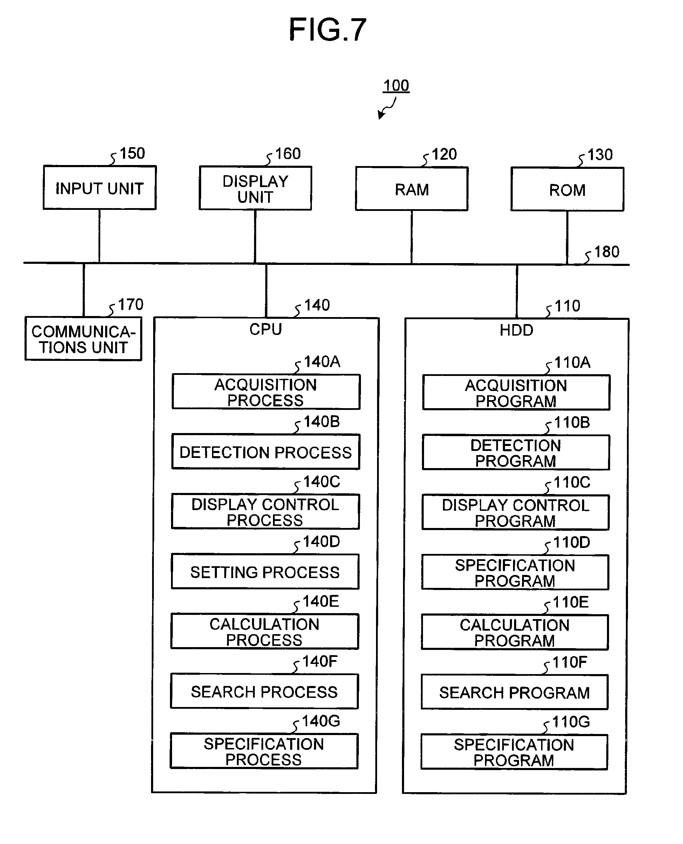

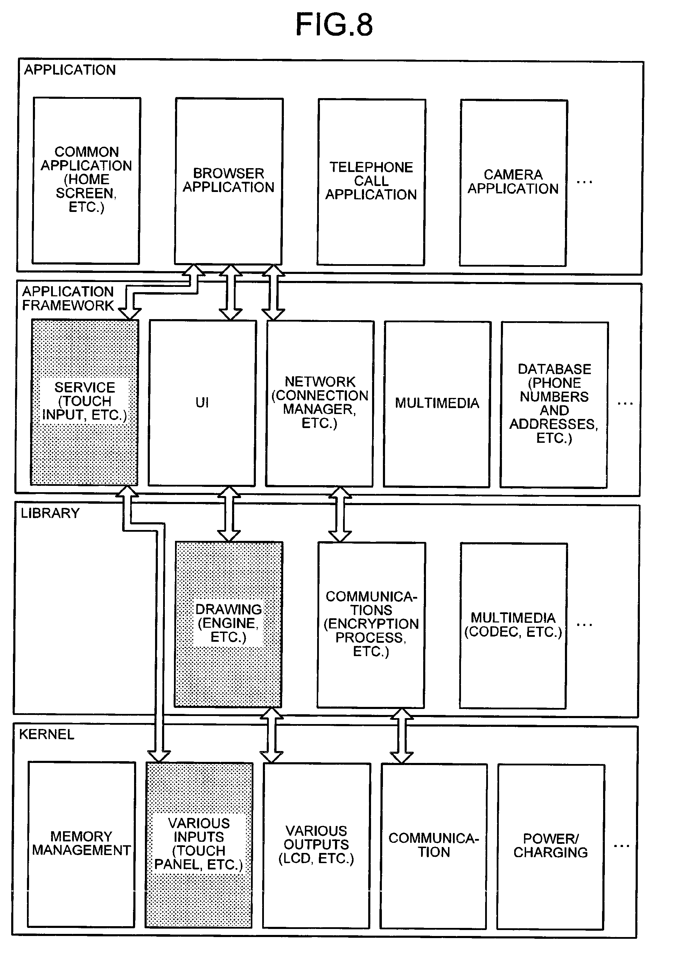

[1] In the first and second embodiments, description has been made in connection with the case where the input unit and the display unit are configured by a single touch panel, but the invention is not limited to the case. That is, the input unit and the display unit may be configured by separate devices.
[2] Each component of each unit illustrated in the first and second embodiments may be configured in physically the different manner as illustrated. That is, a concrete form of distribution or integration of each unit is not restricted to the illustrated form, but some or all of the units may be functionally or physically integrated or distributed in arbitrary units according to various kinds of loads or usage conditions.
   Moreover, various processing functions performed in each device may be entirely or partially executed by a CPU (Central Processing Unit) (or a microcomputer such as an MPU (Micro Processing Unit) or an MCU (Micro Controller Unit)). Needless to say, various kinds of processing functions may be partially or entirely performed on a program which is analyzed and executed by a CPU (or a microcomputer such as an MPU and an MCU), or by hardware of wired logic.
   Incidentally, various kinds of processes described in the first and second embodiments may be realized in a manner that a computer executes a program prepared beforehand. Therefore, hereinbelow, an example of the computer which executes the program having the same functions as in the first embodiment and the second embodiment will be described. FIG. 7 is an explanatory diagram illustrating a computer which executes an input control program.
   A computer 100 which executes the input control program illustrated in FIG. 7 includes an HDD (Hard Disk Drive) 110, a RAM 120, a ROM 130, and a CPU 140. In addition, the computer 100 includes an input unit 150, a display unit 160, and a communications unit 170. Moreover, in the computer 100, the HDD 110, the RAM 120, the ROM 130, the CPU 140, the input unit 150, the display unit 160, and the communications unit 170 are connected to each other ova a bus 180.
   Furthermore, an input control program which enables the same function as in the first and second embodiments to be performed is stored in the HDD 110 beforehand. In addition, a communications program may be recorded in the ROM 130 or a computer-readable recording medium which is readable in a drive (not illustrated) instead of being recorded in the HDD 110. The recording medium may use, for example, a portable recording medium such as a CD-ROM, a DVD disk, and a USB memory, or use a semiconductor memory such as a flash memory. As illustrated in FIG. 7, the input control program includes an acquisition program 110A, a detection program 110B, display control program 110C, a setting program 110D, a calculation program 110E, a search program 110F, and a specification program 110G. The programs 110A, 110B, 110C, 110D, 110E, 110F, and 110G may be integrated or arbitrarily distributed.
   The CPU 140 reads these programs 110A, 110B, 110C, 110D, 110E, 110F, and 110G from the HDD 110. As illustrated in FIG. 7, the CPU 140 reads each of the programs 110A, 110B, 110C, 110D, 110E, 110F, and 110G and comes to function as an acquisition process 140A, a detection process 140B, a display control process 140C, a setting process 140D, a calculation process 140E, a search process 140F, and a specification process 140G. The contents of control of each process carried out during the input control is stored in the RAM 120.
[3] In addition, various kinds of processes described in the first and second embodiments may be realized in a manner that a mobile terminal executes software prepared beforehand. FIG. 8 is a diagram illustrating an example of a software configuration. As illustrated in FIG. 8, a software element especially related to the input control process is an "input" element for a kernel, a "drawing" element for a library, and a "service" element for an application framework.

According to the embodiments of the disclosure, operability of equipment can be improved and the configuration of equipment can be simplified.

## Claims

1. An input control device (10, 30) comprising:
an acquisition unit (11) that acquires a sensing value that varies depending on a distance between a detection target and an input unit and sensed by a sensing device included in the input unit;
a detection unit (12) that detects the detection target based on the acquired sensing value and a threshold selected from among a first threshold corresponding to a first sensing area and a second threshold corresponding to a second sensing area having a shorter distance from the input unit than the first area;
a display control unit (14, 33) that enlarges an image displayed on a display unit when the first threshold is set and the detection target is detected; and
a setting unit (13) that sets the second threshold instead of the first threshold when the first threshold is set and the detection target is detected.

2. The input control device (30) according to claim 1, further comprising:
a calculation unit (31) that calculates a contact-predetermined position of the detection target in the input unit, based on the acquired sensing value at detection timing determined based on the first threshold; and
a search unit (32) that searches for the detection target in a search range including a position in the display unit corresponding to the contact-predetermined position,
wherein the display control unit (33) enlarges the searched selection object.

3. The input control device (30) according to claim 2, wherein the calculation unit (31) calculates a contact position of the detection target in the input unit, based on the acquired sensing value at detection timing determined based on the second threshold, and the input control device (30) further comprises a specification unit (34) that specifies the searched selection object as an execution target when a position in the display unit corresponding to the contact position agrees with a display position of the searched selection object.

4. The input control device according to any one of claims 1 to 3,
wherein the input unit and the display unit are a touch panel.

5. An input control program that causes a processor to execute an input control process of:
acquiring a sensing value that varies depending on a distance between a detection target and an input unit and sensed by a sensing device included in the input unit;
detecting the detection target based on the acquired sensing value and a threshold selected from among a first threshold corresponding to a first sensing area and a second threshold corresponding to a second sensing area having a shorter distance from the input unit than the first area;
enlarging an image displayed on a display unit when the first threshold is set and the detection target is detected; and
setting the second threshold instead of the first threshold when the first threshold is set and the detection target is detected.

6. An input control method comprising:
acquiring a sensing value that varies depending on a distance between a detection target and an input unit and sensed by a sensing device included in the input unit;
detecting the detection target based on the acquired sensing value and a threshold selected from among a first threshold corresponding to a first sensing area and a second threshold corresponding to a second sensing area having a shorter distance from the input unit than the first area;
enlarging an image displayed on a display unit when the first threshold is set and the detection target is detected; and
setting the second threshold instead of the first threshold when the first threshold is set and the detection target is detected.
